# EUROPEAN PATENT APPLICATION

(11) **EP 2 365 477 A1**
(43) Date of publication of application: **14.09.2011**
(21) Application number: 11157088.3
(22) Date of filing: 14.03.2008
(51) Int. Cl.: G07C 9/00, G06Q 30/00, G06Q 20/00

(54) **Personal identification device for secure transactions**

(30) Priority: 14.03.2007 ZA 200702151
(62) Divisional of application: 08719698.6
(71) Applicant: Dexrad (Proprietary) Limited, 2193 Parktown (ZA)
(72) Inventor: Tame Gavin Randall, 0181, Pretoria (ZA)
(74) Representative: Cole, Douglas Lloyd

(57) **Abstract**

A portable identification apparatus and an associated identification and authentication system are described. The portable apparatus can store biometric data of an authorised user of the apparatus and includes a biometric scanner for acquiring biometric data of a user of the apparatus. A processor compares acquired biometric data with the stored biometric data to identify a user of the apparatus, and generates identification information relating to the authorised user if the acquired biometric data matches the stored biometric data. A wireless communication interface transmits the identification information to a communication terminal such as a mobile telephone, for use in a transaction. At an authentication centre comprising a server with an associated database, data is stored identifying each identification apparatus, as well as biometric data corresponding to the stored biometric data in each identification apparatus, and encryption keys for decrypting data in the identification information transmitted via the communication terminal. In a method of use of the apparatus and system, a user of the identification apparatus can be identified to a third party participating in a transaction.

## Description

### BACKGROUND OF THE INVENTION

THIS invention relates to identification apparatus, a system including the identification apparatus, and to a method of identifying a person taking part in a transaction.

Due to the ever increasing number of fraudulent transactions taking place, particularly with regard to credit card transactions, there is a growing need for secure identification of individuals entering into transactions. This applies, for example, to transactions involving the presentation of a physical card at a point of sale, and also to virtual card transactions. In the latter case, transactions typically take place without any confirmed identification of the identity of the cardholder, making such transactions particularly susceptible to fraud.

### SUMMARY OF THE INVENTION

According to a first aspect of the invention there is provided identification apparatus comprising:
data storage means for storing biometric data of an authorised user of the apparatus;
a biometric data acquisition device for acquiring biometric data of a user of the apparatus;
a processor arranged to compare acquired biometric data with the stored biometric data to identify a user of the apparatus and to generate identification information relating to the authorised user if the acquired biometric data matches the stored biometric data; and
a wireless communication interface for transmitting the identification information to a communication terminal, for use in a transaction.

The apparatus preferably includes a global positioning system (GPS) receiver arranged to generate position data, the processor being arranged to include current position data in the identification information.

The biometric data acquisition device may be, for example, a fingerprint scanner, an iris scanner or a retinal scanner.

The wireless communication interface may be, for example, an infra-red interface, a Bluetooth interface, or another radio interface.

The communication terminal to which the identification information is transmitted may be a mobile telephone or a computer having both short-range wireless connectivity and connectivity to an external network.

In other words, the communication terminal is able to receive the identification information from the identification apparatus, and transmit it to a remote authentication centre.

The processor is preferably arranged to encrypt the identification information and to include the encrypted information in a message addressed to the authentication centre for onward transmission to the authentication centre via the communication terminal.

The identification apparatus is preferably portable and self-powered so that it can be carried by a person with their personal effects.

The invention extends to an identification and authentication system including at least one identification apparatus as defined above, and an authentication centre comprising a server with an associated database, the database storing data identifying each identification apparatus, biometric data corresponding to the stored biometric data in each identification apparatus, and encryption keys for decrypting data in the identification information transmitted from any identification apparatus.

Preferably, the authentication station is arranged to transmit authentication data to a designated third party confirming the identity of a user of the identification apparatus in respect of a transaction entered into by the user, if the identification information received from a user's identification device corresponds to data stored by the identification station.

Further according to the invention there is provided a method of identifying a person comprising:
storing biometric data of an authorised user of portable identification apparatus, both in said apparatus and at a central authentication station;
acquiring biometric data of a user of the portable identification apparatus;
generating identification information relating to the authorised user if the acquired biometric data matches the biometric data stored in the portable identification apparatus;
transmitting the identification information to a communication terminal;
forwarding the identification information from the communication terminal to an authentication station;
authenticating the identification information to identify the user; and
transmitting authentication data to a third party for use in a transaction.

### BRIEF DESCRIPTION OF THE DRAWINGS

- Figure 1: is a simplified schematic block diagram showing the internal circuitry of a personal identification device according to the invention; and
- Figure 2: is a simplified schematic diagram showing major components of an identification/authentication system and major steps of a method according to the invention.

### DESCRIPTION OF PREFERRED EMBODIMENTS

The present invention is aimed at providing a method and means for reliably identifying an individual who is taking part in a transaction, or for other purposes. The invention provides a personal identification device which can be issued to an authorised user of the device, which can be used when the authorised user enters into transactions involving a third party, typically a banking institution or a vendor, to identify the authorised user to the third party with a high degree of security.

In order to achieve the required functionality, the personal identification devices communicate with a central authentication centre via a communication terminal which has the necessary connectivity. In particular, the terminal may be a mobile telephone handset which has access to a cellular telephone network or another telephone network, or a personal computer (PC) having connection to the Internet or another network via which it can connect to the authentication station. To communicate with the terminal itself, the personal identification device uses short range wireless communication, typically via a Blue Tooth or an infra-red interface.

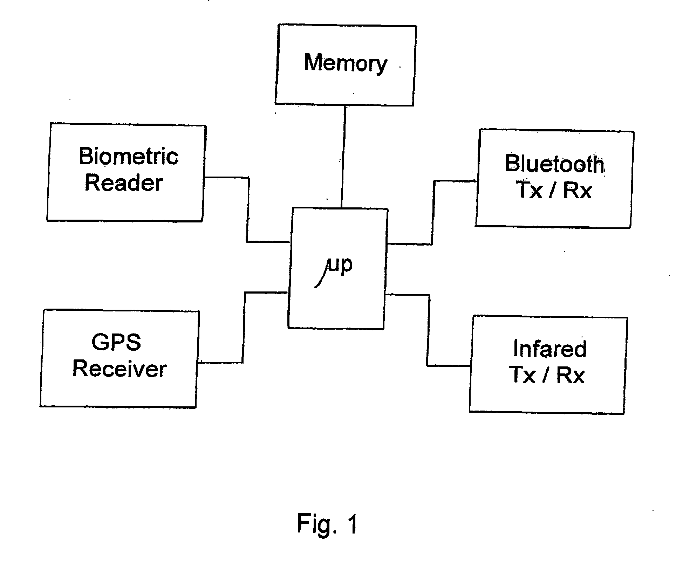

Referring now to Figure 1, the basic components of a personal identification device according to one embodiment of the invention are shown. The device comprises a microprocessor 10 to which are connected a biometric reader 12 and a Global Positioning System (GPS) receiver 14. The microprocessor has associated memory 16 which will typically comprise ROM in which software controlling the operation of the device is stored, and RAM or flash memory for storing data temporarily.

The device has two wireless communication interfaces, in the form of a Blue Tooth interface 18 and an infra-red interface 20. Other wireless interfaces, or a wired interface, could also be provided. A wireless interface is preferred primarily for reasons of convenience of use.

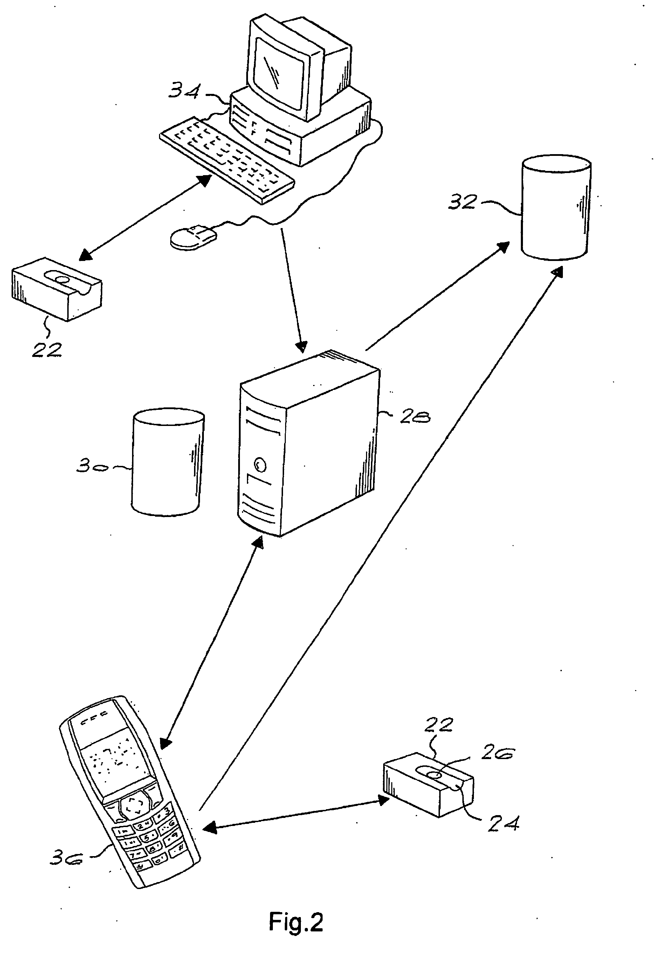

The portable identification device is built into a compact housing 22 as shown in Figure 2. In a preferred embodiment, the biometric reader 12 incorporated in the device is a finger scanner, in which case the housing 22 defines a shallow groove 24 in which the index finger of a user can be received, with a window 26 which allows a CCD or other imaging element to scan the user's finger when it is correctly located in the groove 24.

In other embodiments, the biometric reader could be a voice recognition device, an iris or retinal scanner, or one of numerous other biometric devices.

The system further comprises an authentication centre including at least one server 28 with an associated database 30, the functioning of which is explained in greater detail below. Also show in Figure 2 is a third party institution's database 32, which is accessed in the process of carrying out a transaction involving the third party (which is typically a bank or a vendor) and a computer workstation or PC 34 which is able to communicate with the authentication station and which is used in a registration process when issuing the personal identification device to an authorised user.

Prior to issuing of the personal identification device to an authorised user, a pre-registration security process is carried out to pre-register each device with the authentication centre. Before it can be distributed and issued to the authorised user, the processor of the device generates a random device identity number as well as a random private/public key. This data is transferred to the authentication centre and stored in a device registration field in the database 30. The data is also stored securely in the identification device itself. The identity number and encryption keys are used for all transactions so that the authentication centre and device can interrogate each other and authenticate each other's validity when carrying out transactions.

The transaction security is based on an encryption scheme that integrates the identification device and the authentication centre in an inter-reliant manner and enables the authentication centre to interrogate a device originated transaction and therefore securely authenticate the device, the matching biometrics and the transaction itself. A PKI (public key infrastructure) scheme with private and public keys as well as asymmetric encryption and digital signaturehashing are used to form a secure authentication link between the device and the authentication centre.

In order for the identification device to be issued to an individual, an authorised issuing agent is used. The agent operates the PC 34, which has customised software enabling the registration process, providing an interface both to the device itself and to the authentication centre. The device to be issued is first interrogated using the pre-registered public/private keys and the device's unique identity number, in order to verify that the device is an authentic pre-registered device, via the authentication centre. Once the device has been authenticated as a pre-registered device, a registration biometric template is created, having a digital signature which is created using the device's stored private key. The digital signature of the biometric template is submitted to the authentication centre as a part of the device registration process.

A finger scan of the individual to whom the device is to be issued is carried out, either using the device itself or using a another finger scanner connected to the PC 34. The resulting fingerprint scan is incorporated in the biometric template for the individual, and the template is stored both in the secure memory of the device and in the relevant record at the authentication centre. The prototype device was designed to store 10 biometric templates, catering for multiple users. It will be appreciated that the number of templates that can be stored can be varied as required.

The basic steps of a typical transaction carried out using the personal identification device will now be described. The description below assumes that appropriate software has been loaded onto the communication terminal to be used (mobile telephone or PC) to facilitate the transaction.

The user of the device launches the transaction software on a mobile telephone or PC. The details of the transaction, such as the bank account number from which funds are to be transferred, the amount to be transferred and the account details of a person or entity to whom funds are being transferred, are entered in the software via the communication terminal. The software now communicates with the portable identification device and instructs the user to place their finger on the device. The portable identification device matches the biometric data acquired from the user's live finger scan to that of the stored biometric template. The portable identification device now creates a secure encrypted identification/authentication transaction message which contains the identification result code as well as a unique transaction ID code. This message and the transaction ID code are communicated to the PC or mobile telephone via the short range wireless interface.

The transaction software on the PC or mobile telephone sends the transaction message and transaction identity number to the authentication centre for authentication of the transaction, using the Internet or a dedicated LAN, WAN or other network in the case of a PC, and typically using a cellular network infrastructure in the case of a mobile telephone.

The transaction software on the mobile telephone or PC sends the transaction details and transaction identity number to the relevant third party (in this case the bank). The bank will now register the transaction and wait for the authentication centre transaction authentication details for the particular transaction ID.

On receiving the transaction details the authentication centre will use the portable identification device's identification number to refer to the pre-registered record of the device. It retrieves the public code from the device and decrypts the rest of the transaction message. It uses the public code to verify the digital signature of the matching template used. It also carries out the various data checks on the data check code and in this manner authenticates the device and the transaction data.

The authentication centre compiles a secure message to the third party (bank) with the bank's private key (the bank possesses the public key to decrypt this message). The message contains the authentication results plus the identification results received from the portable identification device. The transaction identity number is included in the secure message. The message is forwarded to the bank.

On receiving the message from the authentication centre the bank decrypts the message with its public key. It uses the transaction identity number to relate to the transaction details that it received from the PC or mobile telephone. The identity and authentication results from the authentication centre will determine whether the transaction will be granted and processed by the bank or logged as a suspicious attempt.

The transaction message security process ensures that the device's authenticity and the device's original stored biometrics template, as well the transaction message itself, is interrogated by the authentication centre each time the device sends identification and transaction verification messages to the authentication centre. The following security processes are carried out by the device:
The biometrics template stored on the device is authenticated and used for positive biometrics matching against a live acquired finger biometrics template. The device uses its stored private key to generate a digital signature of the stored template.
The transaction message is sent as a secured message by the portable identification device to a communication terminal via Blue Tooth or infra-red communication, which is communicated by the terminal to the authentication centre. The secure message includes the following data:
   the device's identity number/code;
   the digital signature of the stored matching biometrics template;
   the result code of the finger biometrics match;
   the date/time stamp of the transaction;
   the global positioning latitude and longitude co-ordinates (if a GPS module is included);
   certain details read from a smart card (if a smart card reading module is included in the device);
   data cheque codes such as CRC (cyclic redundancy codes) and other data verification codes created with Reed Solomon techniques; and
   other authentication data that may be required from the device by the authentication centre.

These message details are encrypted by the private key stored in the device. The encryption process is a multiple layered encryption process. Each encryption layer is inter-reliant but uses a discrete encryption algorithm. The encryption scheme is asymmetric and is decrypted and interrogated by the authentication centre.

The communication terminals which the portable identification device communicates with can be PCs or laptop computers that are connected to the authentication centre by communication networks such as the Internet, an e-mail communication infrastructure, or a dedicated LAN, WAN or other network, for example. The communication terminal can also be a mobile telephone which, due to its portability, is the preferred terminal for this purpose.

In order for these communication terminals to interface with both the portable identification device and the authentication centre, they require specific software. This software opens the communication to the device and collects the transaction identification/authentication data from the portable identification device, for retransmission to the authentication centre by Internet connection, e-mail, SMS or GPRS. The software also allows the user to enter all transaction details (such as a particular bank transaction). These details are sent to the appropriate third party along with the unique transaction number which was also sent to the authentication centre.

A number of enhancements and refinements of the above described embodiment are possible. For example, an additional emergency biometrics template can be added to the process. This means that the identification/authentication device will have any one of ten fingers registered for creating a transaction and any other of the ten fingers as an emergency finger. Should the emergency finger be placed on the device when identifying/authenticating a transaction, the authentication centre will be able to determine that an emergency exists and the user (transactee) is carrying our the transaction under duress. In this event the authentication centre will carry out pre-determined emergency procedures which will be unknown by the person forcing the transaction under duress.

## Claims

1. Identification apparatus for identifying an individual taking part in a transaction, the identification apparatus comprising:
a wireless communication interface for transmitting information to and receiving information from a communication terminal, the communication terminal being able to communicate with a remote authentication centre;
data storage means for securely storing device registration data including a random device identity number and a random public/private key, and registration biometric data of an authorised user of the apparatus;
a biometric data acquisition device for acquiring biometric data of a user of the apparatus; and
a processor arranged to generate the random device identity number and the random public/private key for storage in the data storage means, and to compare acquired biometric data with the stored registration biometric data to identify a user of the apparatus and to generate identification information relating to the authorised user if the acquired biometric data matches the stored registration biometric data;
the wireless communication interface being arranged to transfer the random device identity number and the random public/private key to the remote authentication centre in a registration process, and to transmit the identification information to the communication terminal for use in authorising a transaction.

2. Identification apparatus according to claim 1 **characterised in that** it includes a global positioning system (GPS) receiver arranged to generate position data, the processor being arranged to include current position data in the identification information.

3. Identification apparatus according to claim 1 or claim 2 **characterised in that** the biometric data acquisition device is a fingerprint scanner, an iris scanner or a retinal scanner.

4. Identification apparatus according to any one of claims 1 to 3 **characterised in that** the wireless communication interface is an infra-red interface, a Bluetooth interface, or another radio interface.

5. Identification apparatus according to any one of claims 1 to 4 **characterised in that** the communication terminal to which the identification information is transmitted is a mobile telephone or a computer having both short-range wireless connectivity and connectivity to an external network, so that the communication terminal is able to receive the identification information from the identification apparatus, and forward it to the remote authentication centre.

6. Identification apparatus according to any one of claims 1 to 5 **characterised in that** the processor is arranged to encrypt the identification information and to include the encrypted information in a message addressed to the authentication centre for onward transmission to the authentication centre via the communication terminal.

7. Identification apparatus according to any one of claims 1 to 6 **characterised in that** the identification apparatus is portable and self-powered so that it can be carried by a person with their personal effects.

8. An identification and authentication system including at least one identification apparatus according to any one of claims 1 to 7, an authentication centre comprising a server with an associated database, and an issuing computer able to interface with the identification apparatus and the authentication centre, the issuing computer being operable to generate registration biometric data for submission to the authentication centre and for storage in the data storage means of the device in a registration process, the database storing device registration data received from each identification apparatus including a random device identity number and a random public/private key identifying the identification apparatus, the registration biometric data corresponding to the stored biometric data in each identification apparatus, and encryption keys for decrypting data in the identification information transmitted from any identification apparatus, the remote authentication centre being arranged to receive the identification information forwarded by the communication terminal, for use in authorising a transaction.

9. An identification and authentication system according to claim 8 **characterised in that** the authentication centre is arranged to transmit authentication data to a designated third party confirming the identity of a user of the identification apparatus in respect of a transaction entered into by the user, if the identification information received from a user's identification device corresponds to data stored by the authentication centre.

10. A method of identifying a person taking part in a transaction, the method comprising:
generating a random device identity number and a random public/private key in a processor of portable identification apparatus for storage in data storage means of the portable identification apparatus;
in a registration process, securely storing device registration data including the random device identity number and the random public/private key, and registration biometric data of an authorised user of the portable identification apparatus, both in the portable identification apparatus and at a central authentication station;
acquiring biometric data of a user of the portable identification apparatus;
generating identification information relating to the authorised user if the acquired biometric data matches the biometric data stored in the data storage means of the portable identification apparatus;
transmitting the identification information from the portable identification apparatus to a communication terminal;
forwarding the identification information from the communication terminal to the central authentication station;
authenticating the identification information to identify the user; and
transmitting authentication data to a third party for use in a transaction.

11. A method according to claim 10 **characterised in that** the identification information is transmitted from the portable identification apparatus to the communication terminal via a short-range wireless medium.

12. A method according to claim 10 or claim 11 **characterised in that** the identification information is forwarded by the communication terminal to the central authentication station via a communication network.

13. A method according to claim 12 **characterised in that** the identification information is forwarded by the communication terminal to the central authentication station via a cellular telephone network.

14. A method according to claim 12 **characterised in that** the identification information is forwarded by the communication terminal to the central authentication station via the Internet.
